# EUROPEAN PATENT SPECIFICATION

(11) **EP 3 847 206 B1**
(45) Date of publication and mention of the grant of the patent: **25.12.2024**
(21) Application number: 19856717.4
(22) Date of filing: 03.09.2019
(51) Int. Cl.: C07G 1/00, C08H 7/00, C08L 97/00, F26B 3/02, F26B 3/10, F26B 17/10, F26B 25/00

(54) **METHOD OF PRODUCING LIGNIN WITH REDUCED AMOUNT OF ODOROUS SUBSTANCES**
VERFAHREN ZUR HERSTELLUNG VON LIGNIN MIT REDUZIERTER ANZAHL VON GERUCHSSTOFFEN
PROCÉDÉ DE PRODUCTION DE LIGNINE À TENEUR RÉDUITE EN SUBSTANCES ODORANTES

(30) Priority: 07.09.2018 SE 1851063
(43) Date of publication of application: 14.07.2021
(73) Proprietor: VALMET AB, 851 94 Sundsvall (SE)
(72) Inventor: UHLIN, Anders, 129 40 Hägersten (SE); ÅKERLUND, Lars-Erik, 191 49 Sollentuna (SE); LITTORIN, Anders, 425 30 Hisings-Kärra (SE); WALLMO, Henrik, 441 60 Alingsås (SE)
(74) Representative: Novagraaf Group
(86) International application number: PCT/SE2019/050824
(87) International publication number: WO 2020/050767

(56) References cited:
- WO-A1-2017/222455
- WO-A1-2018/004427
- WO-A2-2020/169809
- US-A- 3 808 192
- US-A1- 2014 187 760
- US-A1- 2016 177 040

## Description

### TECHNICAL FIELD

The present invention relates to a method of producing or treating lignin in order to reduce its amount of odorous substances.

### BACKGROUND ART

Lignin is a complex polymer occurring in certain plant walls making the plant rigid. Bonds linking lignin to cellulose are broken during a chemical pulping process. Lignin isolation from black liquor has been used during past years to provide lignin for commercial use, for example for use as a solid biofuel and dispersant. This lignin is also a valuable material for production of "green chemicals" and as a feedstock for the production of chemicals. The production process of lignin of that kind is described for example in WO2006 /031 175. According to the process, lignin is separated from black liquor. The separation method may include steps to acidify the black liquor so that the lignin is precipitated. The solid phase is then separated from the liquor and can thereafter be cleaned or modified.

However, there is a desire to use lignin products also in other applications than fuel applications. The lignin product obtained by the isolation process is a renewable, non-poisonous environmentally friendly product which could be used for example as a raw material for building materials. However, the obtained lignin product suffers from a drawback of being malodorous, whereby the use of the product has been limited to few applications.

There is thus a great desire to reduce or eliminate the problems with odour in lignin products.

In the prior art, there have been attempts to reduce odour levels in lignin products.

WO 2012 /161 865 discloses a method in which pressurized black liquor may be reacted with an oxidizing agent, such as oxygen, peroxide or the like, in an amount sufficient to reduce or eliminate the odour level in the black liquor so that there will be little or no odour in the final lignin product. This step removes the odours by oxidizing mercaptans (methyl, ethyl), and dimethyl, diethyl sulphides etc. However, with this process there is a risk that also lignin is oxidized and thus deteriorated or chemically modified.

US 2014/187760 discloses a method for separating lignin from black liquor. The product is described to have an insignificant smell.

Even though there are prior art solutions for the reduction of odour levels, especially in respect of mercaptans, there is still a need for a process that removes also other organic odorous compounds effectively, and especially guaiacol and ethylguaiacol. Guaiacol is a naturally occurring organic compound with an odour characteristic of aromatic compounds. Guaiacol in cork stoppers is generally thought to be responsible for cases of cork taint causing unpleasant alterations to wine. The water solubility of guaiacol is limited to about 14-23 g/l at room temperature.

In WO 2018/004 427 is disclosed a method in which the lignin is treated with alcohol in order to reduce the dour of lignin and in WO2017/222 455 it is described how solid phase lignin is contacted with a water solution comprising carboxylic acid in order to reduce odour. The use of alcohol for odour reduction in lignin is also disclosed in US 2016/177040.

These methods describes processes in which lignin is treated carefully such that its chemical structure and bondings remain to a large extent and in which lignin is not essentially fractionated by the odour reduction processes and generally disclose environmentally friendly processes with a reduced risk for hazards in the production process. In particular it is beneficial to avoid a smelly environment when working with and further processing the lignin. It is further an advantage if the odour reduction process can be integrated with lignin separation processes in a simple way.

However, even though the processes described in WO 2018/004 427 and WO2017/222 455 disclose rather efficient processes there is still a desire for an alternative process in order to reduce the odour from lignin.

In WO 2020/168809, which is prior art under Art. 54 (3) EPC, is disclosed how lignin is heated in order to reduce odorous substances such as guaiacol.

### SUMMARY OF THE INVENTION

The object of the present invention is to provide a method for reducing the amount of odorous substances, such as guaiacol and ethylguaiacol, in lignin products. It is also desired to provide a method for the production of a product in which lignin is treated carefully such that its chemical structure and bondings remain to a large extent and in which lignin is not severely fractionated due to odour reduction. It is also desired to provide a method for producing less odorous lignin products with a method that can result in high yield. It is also desired to provide a method which is environmentally friendly. Preferably could the method be used in connection with and/or integrated with available processes for separating lignin, i.e. the production of lignin products, as well as being able to be used for treatment of lignin in various forms after it has been separated and/or purified, e.g. in a pulping process.

The present method aims to address the above object and desires of producing or modifying lignin wherein lignin with reduced amount of odorous substances is obtained. The method is based on the idea of subjecting lignin to a heating procedure. This treatment may be performed during a process when lignin is isolated or may be used for refined lignin. The inventive method for treatment of lignin in order to reduce the amount of guaiacol and ethylguaiacol from the lignin by a heating procedure works in spite of the general knowledge, it has turned out that heating of the lignin causes the lignin to smell less and that the concentrations of guaiacol and ethylguaiacol are considerably lowered. Since the boiling temperature of guaiacol is around 200 degrees Celsius, it has been thought that heating of lignin to lower temperatures not should be efficient due to a too low partial gas pressure. Furthermore, heating of lignin to such temperatures, i.e. 200 degrees Celsius and above, may cause other undesirable reactions in the lignin. Hence, it has generally been believed that heat treatment of lignin not should have any potential of successfully reducing the amount of guaiacol and ethylguaiacol in the lignin without causing undesired side reactions to the lignin. However, studies have shown that in heating operations of lignin, there has been a considerable decrease of the guaiacol content even when subjected to lower temperature and already at 60 degrees there are some effects and the heat treatment should preferably be performed at temperatures above 60 degrees Celsius, more preferably above 80 degrees Celsius where an increased reduction of guaiacol in the lignin has been recognized. Lignin may be subjected to these temperatures when being dried and there will thus be some reduction. However, the effect of the heating is considerably increased with higher temperatures and temperatures up to 160 degrees Celsius, or even up to 200 degrees Celsius, may be used even though some undesired side reactions in the lignin may have started at those temperatures. Hence, the heat treatment may preferably be performed in the interval of 60, or more preferably 80, to 200 degrees Celsius. In general, even though there are effects from a temperature of at least 60 degrees Celsius and the undesired side reactions not are too serious at 160 degrees, it could be desired to heat the lignin to a temperature in a narrower range of 70 to 145 degrees Celsius and even more preferably between 80 to 130 degrees. In particular, 105 degrees Celsius has turned out to provide desired results.

The heating operation is preferably performed when the dry content of the lignin is rather high in order to achieve the desired effect of reducing the content of guaiacol and ethylguaiacol in the lignin. The guaiacol and ethylguaiacol will leave together with moisture in the lignin as the moisture content vaporises from the lignin during the drying and heat treatment. The treatment of the lignin is preferably performed such that lignin having a dry content of at least 50 percent is subjected to the heat treatment. A suitable product to be used in the heat treatment is lignin which has been dewatered and further compressed to reduce the water content. Generally, the heat treatment is performed until the lignin is dried to a dry content suitable to be used as the desired product which is above 90 % dry content. However, the heat treatment could also be used until a lower dry content is reached, e.g. 75 percent, or until a higher dry content is reached.

The heat treatment may be performed together with the drying operation of the lignin or as separate operation after the lignin has been dried to a desired dry content. If the drying and heat treatment is performed at the same time there may be savings in reducing equipment and energy costs. However, there may be advantages in performing the drying and heating as separate steps, e.g. in order to achieve certain properties and characteristics of the dried lignin which not may be achieved if the operations are performed simultaneously. In case the heat treatment is performed in a dry atmosphere, there will of course be some drying of the lignin performed while heating the lignin. On the other hand, dry lignin being heated in moist atmosphere, e.g. by direct heating with steam, may have a lower dry content after the heating operation.

The heat treatment may be performed for longer or shorter time periods. However, even though the heat treatment may be performed for as short times as 5 minutes or shorter, it is generally suggested to treat the lignin at an elevated temperature as described above for at least 10 minutes and more preferably longer periods such as at least 30 minutes or an hour. Using an increased time at an elevated temperature will enable the guaiacol and ethylguaiacol to diffuse from pores and cavities in the lignin to follow the moisture evaporating from the lignin and thus improve the purification of the lignin and reduce the residual amount of guaiacol and ethylguaiacol in the lignin. The reduction of guaiacol and ethylguaiacol seems to be efficient when allowing the lignin to be heated and dried due to the ability of the substances to follow the moisture vaporising and leaving the lignin as the lignin dries. Hence, the heat treatment is effective in reducing the odorous substances in the lignin when there also is a drying of the lignin during the heat treatment. To use a heat treatment has thus been recognised as an efficient and environmentally friendly method, since there is no need for adding potentially hazardous chemicals, for reducing the content of guaiacol and ethylguaiacol in lignin.

It is also desired to provide a method for the production of a product in which lignin is treated carefully such that its chemical structure and bondings remain to a large extent and in which lignin is not severely fractionated due to odour reduction. It is also desired to provide a method for producing lignin products with less odour by a method that can result in high yield. It is also desired to provide a method which is environmentally friendly. Preferably could the method be used in connection with and/or integrated with available processes for separating lignin, i.e. the production of lignin products, as well as being able to be used for treatment of lignin in various forms after it has been separated and o purified, e.g. in a pulping process.

In addition to temperature the result is of course also depending on other parameters such as the shape and size of the lignin to be treated, the time during the lignin is treated as well as how the heat treatment is performed. In case the lignin is in the shape of rather large entities there is a need to treat the lignin for a longer while in order to readily heat all parts of the lignin as well as allowing the guaiacol to find its diffusion ways way out of the lignin. In addition, it is a greater risk that guaiacol, ethylguaiacol and other undesired components get trapped inside a larger piece of lignin. Hence, larger entities will not respond as well to the treatment as smaller pieces. In general, it is desired to use lignin which has been disintegrated to smaller particles before they are subjected to the heating procedure or use a process which disintegrates the lignin to particles during the treatment. According to the claimed method, the particles have a size of less than 10 mm in diameter, preferably less than 5 mm and most preferably less than 1 mm. In tests, lignin having a an average size of around 0.3 mm has been treated with desired results and the method work very well for lignin having an average particle size of less than 0.5 mm. In these tests, there were a rather large fraction of the lignin particles having a size of about 0.01 mm indicating the method is working well for very small sizes of lignin particles. The particle size is defined by the Equivalent Spherical Diameter (or ESD). The ESD of an irregularly shaped object is commonly defined as the diameter of a sphere of equivalent volume. According to the IUPAC definition, the equivalent diameter of a non-spherical particle is equal to a diameter of a spherical particle that exhibits identical properties (e.g., aerodynamic, hydrodynamic, optical, electrical) to that of the investigated non-spherical particle. For particles in non-turbulent motion, the equivalent diameter is identical to the diameter encountered in the Stokes' law. The above particle size intervals are intended to define particle sizes according to Particle Size Distribution D50 which is also known as the median diameter or the medium value of the particle size distribution. It is the value of the particle diameter at 50% in the cumulative distribution. The particle-size distribution (PSD) of a powder, or granular material, or particles dispersed in fluid, is a list of values or a mathematical function that defines the relative amount, typically by mass, of particles present according to size. It is one of an important parameter characterizing particle size. For example, if D50=5.8 um, then 50% of the particles in the sample are larger than 5.8 um, and 50% smaller than 5.8 um. D50 is usually used to represent the average particle size, or average Equivalent Spherical Diameter (or ESD), of group of particles. Particle Size Distribution D50 is preferably measured on the lignin particles after the heat treatment has been performed.

Concerning the time the lignin is subjected to the heat treatment while the heat treatment forms part of the drying operation, the moisture content of the lignin could be used as an indicator of how long time the lignin should be treated. In case the lignin has a rather low dry content (always referred to herein as weight by weight, w/w), the heating operation has not been sufficient to dry and heat the lignin and there is thus not likely the treatment has been sufficient for removing the undesired odorous compounds. The heat treatment should generally continue until the lignin is fairly dry, i.e. a dry content above 90 % or essentially completely dry, i.e. a dry content of above 95 %), or at least until the dry content is above 85 percent. There will of course be some improvements concerning the odour even if the dry content still is as low as 80 percent even though if the lignin has been heat treated until the dry content is above 90 percent there is generally a significant increase in reduction of odorous components in the lignin. The lignin material to be used for the heat treatment could originate from a filter cake such that the lignin subjected to the heat treatment has a dry content above 50 percent. To be noted, these assumptions are not suitably used in case the heat treatment is performed by a wet method, e.g. by heating with steam. The temperature during the heating procedure, the time for the treatment and the final dry content of the resulting product may vary in order to achieve the desired odour reduction also depending on the shape and size of the lignin material to be treated. In general, small particles may be treated a shorter time at lower temperatures and rather quickly reach a high dry content due to the shorter diffusion ways enabling liquid comprising odorous substances such as guaiacol and ethylguaiacol to diffuse out of the lignin.

Concerning the heating of the lignin, essentially any method of heating may be used. However, it is generally considered that a heating method wherein there is a large surface area in contact with a gaseous media is beneficial for the reduction of odorous substances. It is also desired to have a stream of gas moving relative the contact area of the lignin particles. Hence, in order to provide heating with an efficient reduction of odorous substances, a beneficial option is to use small particles of lignin, e.g. less than 1 mm, in an environment where there is an induced movement of a gas for heating of the particles relative the particles in order to provide heating as well as an increased extraction of guaiacol from the particles caused by the flow by lowering the partial pressure of guaiacol close to the surface area of the particles. Hence, it seems like an arrangement such as a ring flow heater, wherein a mixture of drying gas and lignin particles are transported and mixed with each other in a duct, is a suitable alternative for heating the lignin. Likewise, a bed of lignin particles being through flown by a gas, e.g. a fluidized bed or bubbling bed arrangement, having lignin particles therein and a heating carrier gas could also be suitably used for the heating process. In the bed, heat could also be added by using an inert recirculating bed material and heating the inert material. Hence, essentially any heating method causing a particulate matter of lignin to be in contact with a gas could be used successfully for the present invention.

In addition to use a particulate matter mixing with a gas to form some kind of suspension or mixed flow, the lignin could be heated in other ways. In warmer climate, a bulk of lignin could be heated by solar energy, e.g. by depositing a bulk of lignin in a "green house", where it is heated for a longer time at somewhat lower temperatures.

The traditional heating methods may also serve well e.g. tunnel heaters where the material to be heated is transported in a tunnel and generally having a co- current or cross-current of gas flowing therein. The material could be heated in different ways, either by a flow of hot gas, so called direct heating, or using a heating arrangement in the tunnel, e.g. IR-heaters, radiators or recuperators used as heat transferring elements being heated in one portion in the tunnel system and using that energy to heat the lignin transported in the heat exchanging portion of the tunnel heater. This system may be used for continuous drying or as a batch heater. A suitable heater for the purpose of the invention could be a conveyor drier where particulate lignin is transported on a gas permeable belt wherein the gas may flow thorough the bed, e.g. by having an inlet above the belt at one end and an outlet below the belt at another end or the other way around.

Further suitable driers are so called tray heaters, rotary heaters, flash heaters, drum heaters or heated screw conveyers. In these cases, the heating may be performed by a heated surface contacting the lignin, preferably having particulate lignin which may tumble around so as to allow guaiacol and ethylguaiacol to be released from the lignin. If desired, an induced flow of gas or air may be provided to lower the partial pressure of guaiacol and ethylguaiacol and increase the reduction of these substances in the lignin.

The heating may be achieved by using a hot gas which exchange heat with the solid lignin as discussed above. The gas may for example be flue gases from a heat producing process, e.g. from a lime kiln or any other suitable step in a pulping process in pulp plant. In flue gas, which is an essentially inert gas when used for this purpose, are the main components nitrogen, carbon dioxide and water vapour. Other inert gases could also be used. By inert gas is herein meant a gas which not maintain or causes incineration while drying such that a combustion or explosion is prevented. Hence, the gas may comprise oxygen but the content of oxygen should be well below the limits for when combustion or explosions may occur. Hence, it may also be possible to use other kind of gases which not in general are referred to as inert, e.g. air if the conditions such as temperature allows it, but care should be taken such that undesired oxidizing processes and explosion risks are controlled. Hence, regardless of if a gas is used for heating of the lignin or if the lignin is heated by other means, the lignin is preferably heated in an environment of essentially inert gas in order to avoid incineration or explosion while performing the heat treatment.

The method could be combined with treatment of the lignin with an alcohol or carboxylic acid in order to improve the reduction of guaiacol and ethylguaiacol as described in WO 2018/004 427, which discloses the use of alcohol, or in WO2017/222 455 which discloses the use of a carboxylic acid. The lignin could be treated with alcohol or carboxylic acid at any stage but is preferably treated with alcohol or carboxylic acid before it is dried and heated.

The specific time to heat the lignin is depending on the form of the lignin to be treated as well as the temperature. In addition, the demand concerning how much guaiacol and/or ethylguaiacol that is desired to remove from the lignin, the duration of the heating process may vary. Hence, the heating process could be controlled according to different parameters such as temperature of the lignin, temperature of a heating gas, to reach a specific dry content of the lignin or until a specific concentration of guaiacol or ethylguaiacol is reached in the lignin or in the gas leaving the heating process. It is therefore hard to decide a specific time during which the lignin should be heat treated. According to one embodiment, the heating procedure may be designed such that the lignin is heated at a temperature above 60 degrees Celsius, more preferably above 70 degrees Celsius and most preferably above 80 degrees until the content of guaiacol or ethylguaiacol in the lignin has been reduced by at least 60 percent, preferably at least 75 percent and most preferably at least 90 percent. The concentration may be calculated from a peak area of a respective peak in a chromatogram and tests performed for a specific plant for known parameters concerning the lignin and temperature settings, heating method used etc.

Alternatively, the lignin could be heated at a temperature above 60 degrees Celsius, more preferably above 70 degrees Celsius and most preferably above 80 degrees Celsius until the content of guaiacol or ethylguaiacol in the lignin has been reduced to less than 5 mg/kg, more preferably less than 1 mg/kg and most preferably 0,5 mg/kg. The concentrations could be decided as described above

The lignin could be from a wide variety of organic material, especially lignin produced from woody biomass could suitably be used even though any lignin having problem with odour could be treated.

Likewise, the lignin could be produced by a wide variety of processes but could for example be obtained from a process comprising the steps of:
i. precipitating lignin by acidifying black liquor obtained from the alkaline chemical pulping process;
ii. dewatering and/or filtrating the obtained lignin to provide a first filter cake;
iii. re-suspending the lignin;
iv. adjusting the pH of the obtained suspension in step c) to a pH lower than 6;
v. dewatering and/or filtrating the acidic suspension from step d) to provide a second filter cake; and
vi. washing and dewatering the second filter cake; whereby the lignin containing starting material is obtained.

Hence, the heating procedure for reducing odour seems to work for a wide variety of temperature ranges, heating methods and lignin in different shapes. It has been shown in tests that a heating process drastically improves the reduction of guaiacol or ethylguaiacol compared with ordinary drying operation, and results in an almost odourless lignin.

The method may be performed at temperatures which are rather low and the lignin is treated carefully such that its chemical structure and bondings remain to a large extent and in which lignin is not severely fractionated or degraded due to odour reduction. The method also provides for producing less odorous lignin products with a method that can result in high yield. It is also desired to provide a method which is environmentally friendly. Preferably could the method be used in connection with and/or integrated with available processes for separating lignin, i.e. the production of lignin products, as well as being able to be used for treatment of lignin in various forms after it has been separated and o purified, e.g. in a pulping process.

### BRIEF DESCRIPTION OF THE DRAWINGS

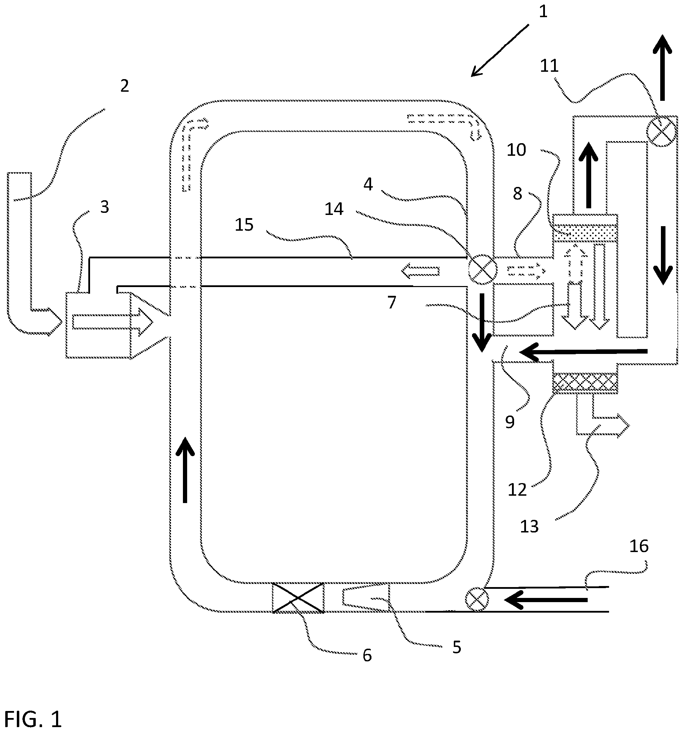

FIG. 1 discloses a ring flow heater for heat treatment of lignin in order to reduce odorous substances

### DETAILED DESCRIPTION OF THE DRAWINGS

In figure 1 is disclosed a heat treatment system 1 for heating of lignin in the shape of a particulate matter. The heat treatment system is connected to a lignin supply conduit 2 which delivers lignin to a lignin feeder 3 connected to a ring flow heater 4. The flow of lignin particles in the figure is represented by block arrows having continuous lines. The ring flow heater 4 is a conduit in which the lignin is transported and mixed by a carrier gas in order to dry the lignin. Hence, the ring flow heater 4 is provided with a blower 5 and a heater 6 in order to heat the carrier gas and provide for transport of the lignin by inducing a movement of the carrier gas withdrawing lignin. The carrier gas is mixed with lignin from the feeder 3 so as to provide a combined flow of lignin and carrier gas. The combined flow of lignin and carrier gas is generally represented by block arrows having dashed lines. The ring flow heater 4 is further connected to a collector 7 by a collector inlet conduit 8 and a collector return conduit 9 where a flow of carrier gas is returned to the ring flow heater 4. A flow of carrier gas without particles is generally designated by solid arrows. The collector 7 is further provided with a filter 10 at the top of the collector 7 close to the inlet of the collector return conduit 9. The collector return conduit 9 is provided with an upper outlet conduit 11 where carrier gas may be exhausted. The filter 10 is intended to separate the gas from lignin particles. The collector 7 further comprises a lower outlet conduit 13 and a discharge device 12 located close to the lower outlet conduit 13. The lignin particles will thus be collected in the outlet stream through the lower outlet conduit 13. The mixed stream of carrier gas and lignin in the ring flow heater 4 is preferably selectively directed to the collector 7 by passing a separator 14 such that a portion of the lignin particles will be directed to the collector 7. If there are larger or heavier particles, e.g. particles with a rather high wet content, present in the ring flow heater 4, they will be guided through a return conduit 15 back to the feeder 3. The heat treatment system 1 also comprises a carrier gas supply conduit 16 in order to replace and compensate for carrier gas exhausted through the upper outlet conduit 11.

When the heat treatment system 1 is in use, lignin is fed to the ring flow heater 4 from the lignin feeder 3. The feeder 3 may be any kind of feeding device suitably used for feeding the lignin substance to the ring flow heater. The feeder 3 could be provided with some kind of crusher or mill in order to disintegrate the lignin to a desired size if that not has been made before the lignin enters the feeder. It is also possible that a crusher or disintegrator could be located inside the ring flow heater 4. The ring flow heater 4 could for example be provided with an arrangement close to the feeder and inlet which allows larger particles or pieces of lignin, which not are carried away with the carrier gas, to be separated and guided to a crusher or disintegrator before being recirculated to the ring flow heater. The return flow of lignin in the return conduit 15 may be directed such that it will pass through the crusher or disintegrator again or bypass these features.

From the feeder 3 the lignin is fed into the ring flow heater 4 where the lignin is mixed with a carrier gas. The carrier gas could be air, flue gas or any desired gas. If there is access to a flue gas it could advantageously be used since the flue gas is a rather inert, hot gas which thus may be used to heat the lignin while also being rather inert and undesired chain reaction in the lignin could be reduced.

The ring flow heater 4 herein disclosed is schematically described and comprises a blower 5 for inducing a circulation of the carrier gas and a heater 6 for heating the carrier gas and the lignin particles. These features may not be needed if for example the gas is induced at high pressure and thus causes a circulation in the ring flow heater 4 when entering the heat treatment system 1. A heater may not be necessary neither if the carrier gas entering the system is hot enough.

The flow of carrier gas and lignin will pass the separator 14 which is designed to divide a flow of the carrier gas and lignin particles such that lignin which has been heated enough will be guided to the collector 7 and the other particles will continue to be heated in the ring flow heater 4. This could for example be achieved by a cyclone which thus will separate particles depending on size, shape and density and thus may produce a stream of lighter, and thus drier, particles to the collector 7 and allow the denser particles to continue in the ring flow drier 4.

The separator 14 may be any kind of separator and could also just be a simple valve allowing a batch of lignin to flow through the ring flow 4 heater for a certain time or until a certain criterion is achieved, e.g. until a certain temperature or dryness has been reached.

The lignin which is directed to the collector 7 will be collected through the lower outlet 13. The mixed stream of smaller lignin particles and carrier gas will flow upwards where the lignin particles will be trapped in the filter while the gas will leave through the upper outlet 11 and somewhat larger particles may flow downwards. In order to collect lignin particles from the filter it may be back flushed and the lignin will thus fall down and may be collected via the lower outlet.

The heat treatment system 1 may include further equipment such as sensors, e.g. for measuring temperatures and humidity, and control units in order to control parameters in dependence of measured values. Hence, the above system only gives a schematic view of how a heat treatment system for reducing odours may be designed. As previously mentioned, there is a multitude of different ways of heating the lignin in order to reduce odours and the above system is only one example of how this may be achieved.

## Claims

1. Method for treatment of lignin in order to reduce the amount of guaiacol and ethylguaiacol in the lignin to provide a lignin with less odour in which said lignin is heated to a temperature above 60 degrees Celsius
and said lignin being subjected to the heat treatment has a dry content of at least 50 % w/w
**characterised in that**
the lignin during heat treatment is in the shape of a particulate material having an average equivalent spherical diameter (ESD) of less than 10 mm, more preferably less than 5 mm and most preferably less than 1 mm.

2. Method for treatment of lignin according to claim 1
**characterised in that**
the heat treatment is performed for at least 5 minutes, more preferably at least 10 minutes and most preferably at least 30 minutes.

3. Method for treatment of lignin according to any of claims 1 or 2 **characterised in that** said
lignin is heated to a temperature of 60 to 160 degrees Celsius, more preferably to a temperature within the range of 70 to 145 degrees Celsius and most preferably within the range of 80 to 130 degrees Celsius.

4. Method for treatment of lignin according to any of claims 1 to 3 **characterized in that**
said lignin have a dry content of 60 to 90 % w/w when starting the heat treatment and a dry content of at least 90 percent, more preferably at least 95 percent and most preferably being essentially dry having a dry content of 98 to 100 percent % w/w after the heat treatment.

5. Method for the treatment of lignin according to any of claims 1 to 4 **characterized in that**
said lignin is heated by a gas.

6. Method for the treatment of lignin according to claim 5
**characterized in that**
said lignin is present as particulate matter and heated by the heating gas used as a carrier gas in a ring flow heater (4).

7. Method for the treatment of lignin according to claim 5
**characterized in that**
said lignin is present as particulate matter and mixed by the heating gas in a bed such as a bubbling bed or a fluidized bed.

8. Method for the treatment of lignin according to any of claims 1 to 4 **characterized in that**
said lignin is heated in an oven, by drum heaters, tray heaters, rotary heaters, heated screw, flash heaters, IR-radiation or by steam heating.

9. Method for the treatment of lignin according to any previous claim **characterized in that**
said lignin is heated in an environment of an essentially inert gas.

10. Method for the treatment of lignin according to any previous claim **characterized in that**
said lignin is treated by an alcohol and/or a carboxylic acid in addition to the heat treatment.

11. Method for the treatment of lignin according to any previous claim **characterized in that**
said lignin is heated at a temperature above 60 degrees Celsius, more preferably above 70 degrees and most preferably above 80 degrees until the content of guaiacol or ethylguaiacol in the lignin has been reduced by at least 60 percent, preferably at least 75 percent and most preferably at least 90 percent, the concentration being calculated from a peak area of a respective peak in a chromatogram.

12. Method for the treatment of lignin according to any previous claim **characterized in that**
said lignin is heated at a temperature above 60 degrees Celsius, more preferably above 70 degrees and most preferably above 80 degrees until the content of guaiacol or ethylguaiacol in the lignin has been reduced to less than 5 mg/kg, more preferably less than 1 mg/kg and most preferably 0.5 mg/kg, the concentration being calculated from a peak area of a respective peak in a chromatogram.

13. Method for the treatment of lignin according to any previous claim **characterized in that**
the lignin originates from woody biomass.

14. A method according to any of preceding claims wherein the lignin is obtained from a process comprising the steps of:
i. precipitating lignin by acidifying black liquor obtained from the alkaline chemical pulping process;
ii. dewatering and/or filtrating the obtained lignin to provide a first filter cake;
iii. re-suspending the lignin;
iv. adjusting the pH of the obtained suspension in step c) to a pH lower than 6;
v. dewatering and/or filtrating the acidic suspension from step d) to provide a second filter cake; and
vi. washing and dewatering the second filter cake; whereby the lignin containing starting material is obtained.

## Patentansprüche

1. Verfahren für Behandlung von Lignin, um die Menge an Guajacol und Ethylguajacol in dem Lignin zu verringern, um ein Lignin mit weniger Geruch bereitzustellen, wobei das Lignin auf eine Temperatur über 60 Grad Celsius erwärmt wird,
und das Lignin, das der Wärmebehandlung unterzogen wird, einen Trockengehalt von mindestens 50 Gew.-% aufweist,
**dadurch gekennzeichnet, dass**
das Lignin während der Wärmebehandlung in der Form eines partikularen Materials, das einen durchschnittlichen äquivalenten Kugeldurchmesser (ESD) von weniger als 10 mm, mehr bevorzugt weniger als 5 mm und am meisten bevorzugt weniger als 1 mm, aufweist, vorliegt.

2. Verfahren für Behandlung von Lignin nach Anspruch 1,
**dadurch gekennzeichnet, dass**
die Wärmebehandlung mindestens 5 Minuten lang, mehr bevorzugt mindestens 10 Minuten lang und am meisten bevorzugt mindestens 30 Minuten lang, durchgeführt wird.

3. Verfahren für Behandlung von Lignin nach einem der Ansprüche 1 oder 2, **dadurch gekennzeichnet, dass** das
Lignin auf eine Temperatur von 60 bis 160 Grad Celsius, mehr bevorzugt auf eine Temperatur innerhalb des Bereichs von 70 bis 145 Grad Celsius und am meisten bevorzugt innerhalb des Bereichs von 80 bis 130 Grad Celsius, erwärmt wird.

4. Verfahren für Behandlung von Lignin nach einem der Ansprüche 1 bis 3, **dadurch gekennzeichnet, dass**
das Lignin einen Trockengehalt von 60 bis 90 Gew.-% zu Beginn der Wärmebehandlung und einen Trockengehalt von mindestens 90 Gew.-%, mehr bevorzugt mindestens 95 Gew.-% und am meisten bevorzugt im Wesentlichen trocken ist, wobei es einen Trockengehalt von 98 bis 100 Gew.-% nach der Wärmebehandlung aufweist.

5. Verfahren für Behandlung von Lignin nach einem der Ansprüche 1 bis 4, **dadurch gekennzeichnet, dass**
das Lignin durch ein Gas erwärmt wird.

6. Verfahren für Behandlung von Lignin nach Anspruch 5,
**dadurch gekennzeichnet, dass**
das Lignin als partikulare Materie vorhanden ist und durch das erwärmende Gas, das als ein Trägergas in einem Ringströmungsheizer (4) verwendet wird, erwärmt wird.

7. Verfahren für Behandlung von Lignin nach Anspruch 5,
**dadurch gekennzeichnet, dass**
das Lignin als partikulare Materie vorhanden ist und durch das erwärmende Gas in einem Bett, wie etwa einem Sprudelbett oder einem Wirbelbett, vermischt wird.

8. Verfahren für Behandlung von Lignin nach einem der Ansprüche 1 bis 4, **dadurch gekennzeichnet, dass**
das Lignin in einem Ofen durch Trommelheizungen, Tablettheizungen, Rotationsheizungen, eine beheizte Schnecke, Kurzzeiterhitzer, IR-Strahlung oder durch Dampfheizen erwärmt wird.

9. Verfahren für Behandlung von Lignin nach einem der vorhergehenden Ansprüche,
**dadurch gekennzeichnet, dass**
das Lignin in einer Umgebung eines im Wesentlichen inerten Gases erwärmt wird.

10. Verfahren für Behandlung von Lignin nach einem der vorhergehenden Ansprüche,
**dadurch gekennzeichnet, dass**
das Lignin zusätzlich zu der Wärmebehandlung durch einen Alkohol und/oder eine Carbonsäure behandelt wird.

11. Verfahren für Behandlung von Lignin nach einem der vorhergehenden Ansprüche,
**dadurch gekennzeichnet, dass**
das Lignin bei einer Temperatur über 60 Grad Celsius, mehr bevorzugt über 70 Grad und am meisten bevorzugt über 80 Grad, erwärmt wird, bis der Gehalt an Guajacol oder Ethylguajacol in dem Lignin um mindestens 60 Prozent, vorzugsweise mindestens 75 Prozent und am meisten bevorzugt mindestens 90 Prozent, verringert wurde, wobei die Konzentration aus einer Peakfläche eines jeweiligen Peaks in einem Chromatogramm berechnet wird.

12. Verfahren für Behandlung von Lignin nach einem der vorhergehenden Ansprüche,
**dadurch gekennzeichnet, dass**
das Lignin bei einer Temperatur über 60 Grad Celsius, mehr bevorzugt über 70 Grad und am meisten bevorzugt über 80 Grad, erwärmt wird, bis der Gehalt an Guajacol oder Ethylguajacol in dem Lignin auf weniger als 5 mg/kg, mehr bevorzugt weniger als 1 mg/kg und am meisten bevorzugt 0,5 mg/kg, verringert wurde, wobei die Konzentration aus einer Peakfläche eines jeweiligen Peaks in einem Chromatogramm berechnet wird.

13. Verfahren für Behandlung von Lignin nach einem der vorhergehenden Ansprüche,
**dadurch gekennzeichnet, dass**
das Lignin aus holziger Biomasse stammt.

14. Verfahren nach einem der vorstehenden Ansprüche, wobei das Lignin aus einen Prozess gewonnen wird, umfassend die Schritte:
i. Ausfällen von Lignin durch Ansäuern von Schwarzlauge, die aus dem alkalischen chemischen Aufschlussprozess gewonnen wird ;
ii. Entwässern und/oder Filtrieren des gewonnenen Lignins, um einen ersten Filterkuchen bereitzustellen ;
iii. erneut Suspendieren des Lignins ;
iv. Einstellen des pH-Werts der gewonnen Suspension in Schritt c) auf einen pH-Wert unter 6 ;
v. Entwässern und/oder Filtrieren der sauren Suspension aus Schritt d), um einen zweiten Filterkuchen bereitzustellen ; und
vi. Waschen und Entwässern des zweiten Filterkuchens ; wodurch das ligninhaltige Ausgangsmaterial gewonnen wird.

## Revendications

1. Procédé de traitement de lignine visant à réduire la quantité de gaïacol et d'éthylgaïacol dans la lignine pour fournir une lignine moins odorante, dans lequel ladite lignine est chauffée à une température supérieure à 60 degrés Celsius
et ladite lignine soumise au traitement thermique a une teneur en matière sèche d'au moins 50 % p/p
**caractérisé en ce que**
la lignine, lors du traitement thermique, se présente sous la forme d'un matériau particulaire ayant un diamètre sphérique équivalent moyen (ESD) inférieur à 10 mm, plus préférablement inférieur à 5 mm et, le plus préférablement, inférieur à 1 mm.

2. Procédé de traitement de lignine selon la revendication 1,
**caractérisé en ce que**
le traitement thermique est effectué pendant au moins 5 minutes, plus préférablement au moins 10 minutes et, le plus préférablement, au moins 30 minutes.

3. Procédé de traitement de lignine selon l'une quelconque des revendications 1 ou 2,
**caractérisé en ce que** ladite
lignine est chauffée à une température de 60 à 160 degrés Celsius, plus préférablement à une température dans la plage de 70 à 145 degrés Celsius et, le plus préférablement, dans la plage de 80 à 130 degrés Celsius.

4. Procédé de traitement de lignine selon l'une quelconque des revendications 1 à 3,
**caractérisé en ce que**
ladite lignine a une teneur en matière sèche de 60 à 90 % p/p au début du traitement thermique et une teneur en matière sèche d'au moins 90 %, plus préférablement d'au moins 95 % et, le plus préférablement, étant essentiellement sèche, avec une teneur en matière sèche de 98 à 100 % p/p après le traitement thermique.

5. Procédé de traitement de lignine selon l'une quelconque des revendications 1 à 4,
**caractérisé en ce que**
ladite lignine est chauffée par un gaz.

6. Procédé de traitement de lignine selon la revendication 5,
**caractérisé en ce que**
ladite lignine est présente sous la forme d'une matière particulaire et chauffée par le gaz de chauffage utilisé comme gaz porteur dans un réchauffeur à circulation annulaire (4).

7. Procédé de traitement de lignine selon la revendication 5,
**caractérisé en ce que**
ladite lignine est présente sous la forme d'une matière particulaire et mélangée par le gaz de chauffage dans un lit tel qu'un lit à bulles ou un lit fluidisé.

8. Procédé de traitement de lignine selon l'une quelconque des revendications 1 à 4,
**caractérisé en ce que**
ladite lignine est chauffée dans un four, par des réchauffeurs à tambour, des réchauffeurs à plateaux, des réchauffeurs rotatifs, une vis chauffée, des réchauffeurs instantanés, un rayonnement IR ou par chauffage à vapeur.

9. Procédé de traitement de lignine selon l'une quelconque revendication précédente,
**caractérisé en ce que**
ladite lignine est chauffée dans un environnement de gaz essentiellement inerte.

10. Procédé de traitement de lignine selon l'une quelconque revendication précédente,
**caractérisé en ce que**
ladite lignine est traitée par un alcool et/ou un acide carboxylique en plus du traitement thermique.

11. Procédé de traitement de lignine selon l'une quelconque revendication précédente,
**caractérisé en ce que**
ladite lignine est chauffée à une température supérieure à 60 degrés Celsius, plus préférablement supérieure à 70 degrés et, le plus préférablement, supérieure à 80 degrés, jusqu'à ce que la teneur en gaïacol ou en éthylgaïacol de la lignine ait été réduite d'au moins 60 pour cent, plus préférablement d'au moins 75 pour cent et, le plus préférablement, d'au moins 90 pour cent, la concentration étant calculée à partir d'une surface de pic d'un pic respectif dans un chromatogramme.

12. Procédé de traitement de lignine selon l'une quelconque revendication précédente,
**caractérisé en ce que**
ladite lignine est chauffée à une température supérieure à 60 degrés Celsius, plus préférablement supérieure à 70 degrés et, le plus préférablement, supérieure à 80 degrés, jusqu'à ce que la teneur en gaïacol ou en éthylgaïacol de la lignine ait été réduite à moins de 5 mg/kg, plus préférablement moins de 1 mg/kg et, le plus préférablement, moins de 0,5 mg/kg, la concentration étant calculée à partir d'une surface de pic d'un pic respectif dans un chromatogramme.

13. Procédé de traitement de lignine selon l'une quelconque revendication précédente,
**caractérisé en ce que**
la lignine provient d'une biomasse forestière.

14. Procédé selon l'une quelconque des revendications précédentes, dans lequel la lignine est obtenue à partir d'un processus comprenant les étapes consistant à :
i. précipiter la lignine par acidification d'une liqueur noire obtenue par le processus de réduction en pâte chimique alcaline ;
ii. déshydrater et/ou filtrer la lignine obtenue pour donner un premier gâteau de filtration ;
iii. remettre la lignine en suspension ;
iv. ajuster le pH de la suspension obtenue à l'étape c) à un pH inférieur à 6 ;
v. déshydrater et/ou filtrer la suspension acide obtenue à l'étape d) pour donner un second gâteau de filtration ; et
vi. laver et déshydrater le second gâteau de filtration ; moyennant quoi la matière de base contenant de la lignine est obtenue.
